# NOUVEAU FASCICULE DE BREVET EUROPEEN

(11) **EP 3 272 629 B2**
(45) Date de publication et mention de la décision concernant l'opposition: **20.03.2024**
(45) Mention de la délivrance du brevet: 31.03.2021
(21) Numéro de dépôt: 17182248.9
(22) Date de dépôt: 20.07.2017
(51) Int. Cl.: B62D 59/04

(54) **PULVERISATEUR TRAINE AVEC ASSISTANCE**
GEZOGENES SPRÜHGERÄT MIT HILFSSYSTEM
TOWED SPRAYER WITH ASSISTANCE

(30) Priorité: 20.07.2016 FR 1656912
(43) Date de publication de la demande: 24.01.2018
(73) Titulaire: Exel Industries, 75009 Paris (FR)
(72) Inventeur: DUCAMPS, Thibaut, 75009 Paris (FR)
(74) Mandataire: Argyma

(56) Documents cités:
- EP-A1- 0 230 022
- WO-A1-2009/023931
- WO-A1-2009/023931
- DE-A1- 19 628 031
- DE-A1-102009 032 754
- DE-A1-102010 005 976
- DE-A1-102010 062 979
- FR-A- 1 452 016
- FR-A1- 2 295 314
- FR-A1- 2 651 729
- FR-A1- 2 970 461
- GB-A- 2 542 708
- US-A- 3 952 511
- US-A1- 2011 079 659
- US-A1- 2013 076 497
- US-A1- 2013 079 979
- US-A1- 2013 079 980
- Automotive Handbook, 2nd Edition, Bosch, pages 340-341
- Information sheet - Freewheeling on MCR motors, RE 15225-02/06 2014, Bosch Rexroth AG
- Design and Development of a Low Speed High Torque Hydraulic Motor, R.J. Recker-John Deere Product Engineering Center, SAE Technical Paper Series
- Konopka, Stanislaw & Lopatka, Marian & Przybysz, Miroslaw.(2015). Kinematic Discrepancy of Hydrostatic Drive of Unmanned Ground Vehicle. Archive of Mechanical Engineering. 62.10.1515/meceng -2015-0024

## Description

La présente invention a pour objet un pulvérisateur traîné destiné à être attelé à un tracteur, tel qu'un tracteur agricole. Un tel pulvérisateur est connu du document publié GB 2542708 A, et comprend une cuve et des rampes de pulvérisation.

Les activités agricoles comme celles de la culture de pomme de terre, par exemple, nécessite la pulvérisation de fertilisants sur les sols ou de produits phytosanitaires sur les cultures. Cette pulvérisation peut être réalisée au moyen d'un pulvérisateur traîné par un tracteur.

Le pulvérisateur traîné comprend une cuve permettant de stocker le produit à répandre sur la culture ou le sol et un moyen d'épandage comprenant des buses pour diffuser le produit.

Cependant, lorsque le terrain agricole est humide ou incliné, les roues du pulvérisateur traîné adhèrent difficilement au sol, entrainant le glissement latéral du pulvérisateur traîné et provoquant des dégâts aux cultures.

Ce problème se produit particulièrement dans le cadre de la culture en ligne nécessitant des roues étroites afin de ne pas abîmer les cultures.

La taille des cuves et des rampes est de plus en plus importante. Les pulvérisateurs traînés sont par conséquent de plus en plus lourds. Le tracteur est le seul à avoir de la motricité et bénéficie d'un très faible report de charge de la part du pulvérisateur trainé.

Une solution connue consiste à alourdir le tracteur pour pouvoir travailler en sol humide ou accidenté.

Cependant, le poids supplémentaire du tracteur abime davantage les cultures.

De plus, en condition accidenté, lorsqu'il y a des descentes ou lorsque le tracteur fait une marche arrière, il y a un risque de mise en portefeuille de l'ensemble à cause de la masse inerte du pulvérisateur traîné.

La présente invention a pour objet de remédier à ces inconvénients en proposant un pulvérisateur traîné ayant une meilleure adhérence en sol humide et permettant de circuler dans des endroits difficilement accessible, en toute sécurité.

A cet effet, l'invention concerne un pulvérisateur traîné destiné à être tracté par un tracteur comprenant au moins deux roues.

Selon l'invention, pulvérisateur traîné comprend un système d'assistance comportant:
- au moins un moteur couplé aux roues du pulvérisateur traîné,
- des moyens de couplage pour coupler et découpler le moteur avec les roues, et
- un dispositif de contrôle contrôlant le moteur et les moyens de couplage.

Selon l'invention, le moteur est un moteur hydraulique.

Selon l'invention e, le système d'assistance comprend :
- un moteur hydraulique par roue, le moteur hydraulique étant alimenté en fluide sous pression par des moyens d'alimentation hydraulique pour entrainer les roues,
- des moyens de couplage pour coupler et découpler les moteurs hydrauliques avec les roues, le dispositif de contrôle contrôlant les moyens d'alimentation hydraulique et les moyens de couplage.

Selon l'invention, le pulvérisateur traîné comprend un système de compensation permettant de répartir la pression hydraulique entre chaque moteur hydraulique.

Selon une variante, le pulvérisateur traîné comprend un capteur de vitesse relié au dispositif de contrôle.

Selon l'invention, le pulvérisateur traîné comprend un inclinomètre gauche/droite relié au dispositif de contrôle.

Selon une autre variante, le pulvérisateur traîné comprend un inclinomètre avant/arrière relié au dispositif de contrôle.

Selon une autre variante, le pulvérisateur traîné comprend un capteur de pression de frein de service permettant de diminuer la poussée générée par le système d'assistance en cas de freinage du tracteur. Le capteur de pression de frein de service est relié au dispositif de contrôle.

Selon une autre variante, le pulvérisateur traîné comprend un capteur d'angle mesurant l'angle entre le pulvérisateur traîné et le tracteur.

Selon une autre variante, le dispositif de contrôle comprend un moyen de calcul permettant de calculer la pression hydraulique à transmettre par la pompe hydraulique aux deux moteurs hydrauliques d'après les informations données par l'inclinomètre avant/arrière, le capteur d'angle et le capteur de pression de frein de service afin de permettre un démarrage du pulvérisateur traîné en côte.

La vitesse maximale du pulvérisateur traîné est supérieure à 5 km/h, de préférence comprise entre 10 km/h et 20 km/h et avantageusement comprise entre 13 km/h et 16 km/h.

L'invention permet ainsi de fournir un pulvérisateur traîné présentant une meilleure adhérence sur sol humide. Le pulvérisateur traîné glisse moins sur les sols humides et abîme moins les cultures.

L'invention est particulièrement utile pour la culture de pomme de terre pour laquelle les roues du pulvérisateur traîné sont étroites mais peut être également utilisée pour n'importe quel type de culture agricole.

Le pulvérisateur traîné permet également d'atteindre des endroits difficilement accessibles, comme des dévers, en toute sécurité.

Il peut reculer plus facilement, notamment en pente inclinée et limiter les en cas de position en portefeuille.

Un mode de retenu permet également de réaliser des phases de descente en toute sécurité.

Cette solution permet de réduire la consommation de carburant, notamment en utilisant des tracteurs moins lourds.

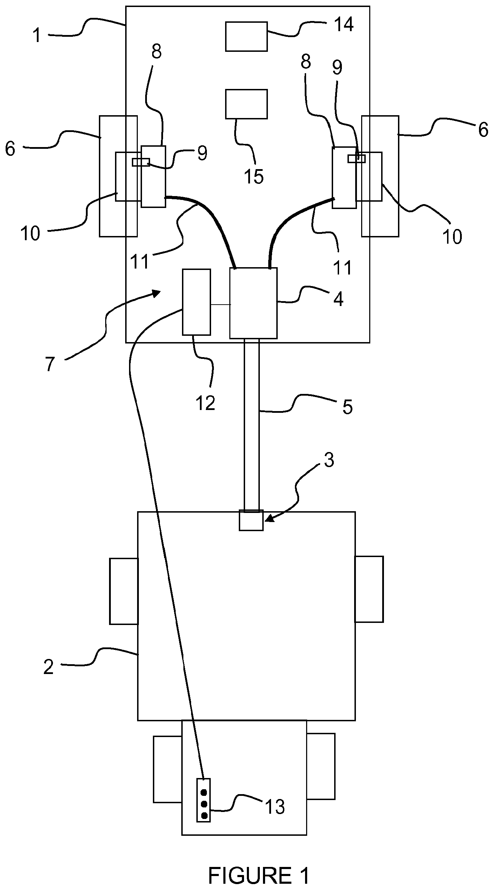

Les caractéristiques de l'invention seront décrites plus en détail en se référant à la figure 1:
- la figure 1 représente schématiquement un pulvérisateur traîné attelé à un tracteur selon un mode de réalisation de l'invention.

L'invention concerne un pulvérisateur traîné 1 comprenant une cuve permettant de stocker le produit à répandre sur le terrain agricole et deux rampes comprenant chacune des buses pour diffuser le produit (non représenté).

Le pulvérisateur traîné 1 comprend deux roues 6 disposées de chaque côté de ce dernier. Il peut en variante comprendre quatre roues, voire plus.

Le pulvérisateur traîné 1 est destiné à être tracté par un tracteur 2 comprenant une prise de force 3.

Selon l'invention, le pulvérisateur traîné 1 comprend un système d'assistance 7 comportant au moins un moteur 8 couplé aux deux roues 6.

Le système d'assistance 7 comporte des moyens de couplage 9 pour coupler et découpler le moteur 8 avec les roues 6 et un dispositif de contrôle 12 contrôlant le moteur 8 et les moyens de couplage 9.

Selon l'invention, le moteur 8 est un moteur hydraulique 8.

Le système d'assistance 7 comporte un moteur hydraulique 8 par roue 6. Chaque moteur hydraulique 8 est alimenté en fluide sous pression pardes moyens d'alimentation hydraulique 4 pour entrainer les roues 6.

Les moyens d'alimentation hydraulique 4 peuvent provenir directement du tracteur 2. Autrement dit, le tracteur 2 fournit lui-même le fluide sous pression.

Selon une autre variante représentée sur la figure 1, les moyens d'alimentation hydraulique 4 comprennent une pompe hydraulique 4 placée sur le pulvérisateur traîné 1. La pompe hydraulique 4 est reliée à la prise de force 3 du tracteur 2.

La pompe hydraulique 4 est entrainée par la prise de force 3 du tracteur 2 par l'intermédiaire d'un arbre de transmission 5.

La pompe hydraulique 4 alimente les moteurs hydrauliques 8 en fluide sous pression par l'intermédiaire de flexibles 11 pour entrainer les roues 6. Le fluide sous pression est de l'huile.

La pression du fluide entraîne la rotation de chaque moteur hydraulique 8.

Le pulvérisateur traîné 1 comprend des moyens de couplage 9 pour coupler et découpler les moteurs hydrauliques 8 avec les roues 6.

Le pulvérisateur traîné 1 comprend un dispositif de contrôle 12 contrôlant la pompe hydraulique 4 et les moyens de couplage 9.

La pompe hydraulique 4 comprend une entrée reliée à un réservoir de fluide. Elle permet de mettre ce fluide sous pression et d'alimenter les moteurs hydrauliques 8 pour faire tourner les roues 6.

La pression du fluide obtenue peut être de 330 bars, par exemple, pour une cylindrée de pompe hydraulique 4 de 52 cm³/tr, une vitesse de pompe hydraulique 4 de 2295 RPM, un ratio de multiplication entre la pompe hydraulique 4 et l'arbre de la prise de force 3 de 4,25, une vitesse d'arbre de la prise de force 3 de 2295 RPM et une cylindrée du moteur de tracteur de 1248 cm³/tr. Le débit de la pompe est de 110 l/min, fournissant une puissance de 60 HP.

La vitesse maximale générée par le système d'assistance 7 est calculée pour pouvoir être utilisée lors de toutes les phases de travail au champ.

La vitesse maximale du pulvérisateur traîné 1 est supérieure à 5 km/h, de préférence comprise entre 10 km/h et 20 km/h et avantageusement comprise entre 13 km/h et 16 km/h.

Le couple à la roue 6 diminue lorsque la vitesse augmente.

Chaque moteur hydraulique 8 est fixé sur un moyeu 10 et chacune des roues 6 est fixée sur le moteur hydraulique 8. Plus précisément, la roue 6 comprend une jante qui est fixée sur le moteur hydraulique 8. La jante entoure le moteur hydraulique 8.

Le moteur hydraulique 8 est un moteur à piston axiaux ou de préférence radiaux car moins consommateur d'énergie. Le pulvérisateur traîné 1 comprend un inclinomètre avant/arrière 14 relié au dispositif de contrôle 12.

L'inclinomètre avant/arrière 14 peut être disposé sur le pulvérisateur traîné 1 ou être fixé sur un attelage reliant le tracteur 2 au pulvérisateur traîné 1. L'inclinomètre avant/arrière 14 permet au système d'assistance 7 de déterminer si le pulvérisateur traîné 1 remonte ou descend un terrain incliné. Cette information est transmise au dispositif de contrôle 12.

Le système d'assistance 7 peut fonctionner en mode retenu dans les descentes.

Le pulvérisateur traîné 1 comprend un capteur de vitesse intégré dans l'essieu reliant les deux roues 6 ou un capteur de vitesse par roue 6. L'information de vitesse est transmise au dispositif de contrôle 12.

Le capteur de vitesse permet d'informer le système d'assistance 7 de la vitesse du pulvérisateur traîné 1. Si ce dernier dépasse une vitesse limite, le système d'assistance 7 est désengagé. Pour cela, le dispositif de contrôle 12 transmet un signal aux moyens de couplage 9 qui découplent les moteurs hydrauliques 8 des roues 6.

Le pulvérisateur traîné 1 comprend un système de compensation permettant de répartir la pression hydraulique entre chaque moteur hydraulique 8.

Le pulvérisateur traîné 1 comprend un inclinomètre gauche/droite 15 relié au dispositif de contrôle 12.

La pression hydraulique peut être différente pour chaque moteur hydraulique 8. Ceci permet d'obtenir un couple différent pour chaque roue 6, ou dit différemment, d'obtenir une poussée différente entre la roue gauche et la roue droite. Le système de compensation est particulièrement intéressant dans les virages ou en pente.

Dans les pentes, l'une des roues est plus basse que l'autre et supporte une charge plus importante que l'autre. L'inclinaison est détectée par l'inclinomètre gauche/droite 15 qui transmet l'information au dispositif de contrôle 12. Ce dernier control le système de compensation qui permet de pousser davantage la roue qui est la plus basse.

Dans les virages, la charge se transfert sur la roue qui est à l'extérieur du virage. Le système de compensation permet de pousser davantage cette roue. La détection du virage est également détectée par l'inclinomètre gauche/droite 15.

Le système de compensation influe sur la vitesse des roues et compense ainsi le glissement latéral.

Le pulvérisateur traîné 1 comprend un capteur de pression de frein de service (non représenté) relié au dispositif de contrôle 12 et permettant de désengager le système d'assistance 7 en cas de freinage du tracteur 2 et donc de ne pas pousser le pulvérisateur traîné 1 en cas de freinage du tracteur 2.

Le capteur de pression de frein de service permet également de limiter le couple au freinage.

Le système d'assistance 7 comprend un capteur d'angle ou un gyroscope mesurant l'angle entre le pulvérisateur traîné 1 et le tracteur 2.

Les informations transmises au dispositif de contrôle 12 par le capteur de pression de frein de service, le capteur d'angle et l'inclinomètre avant/arrière 14 sont combinées pour permettre un démarrage du pulvérisateur traîné 1 en côte.

En effet, le dispositif de contrôle 12 comprend un moyen de calcul permettant de calculer la pression hydraulique à transmettre par la pompe hydraulique 4 aux deux moteurs hydrauliques 8 d'après les informations données par l'inclinomètre, le capteur d'angle et le capteur de pression de frein de service afin de permettre un démarrage du pulvérisateur traîné 1 en côte.

Le pulvérisateur traîné 1 comprend un système de réfrigération de la pompe hydraulique 4 comportant un ventilateur (non représenté).

Le système de réfrigération comprend un capteur de température d'huile. Le capteur de température d'huile est une sonde thermostatique placée à l'entrée du système de réfrigération.

Le capteur de température d'huile est relié au dispositif de contrôle 12.

Le système d'assistance 7 est désengagé en cas de dépassement d'une température limite.

Le dispositif de contrôle 12 est relié à un boitier de commande 13 qui peut être placé dans la cabine du tracteur 2, par exemple.

Le boitier de commande 13 comprend, par exemple, deux boutons dont un bouton d'arrêt d'urgence du système d'assistance 7 et un bouton deux positions (engagement manuel du système d'assistance 7 et désengagement du système d'assistance 7).

Le boitier de commande 13 comprend également une lampe de défaut. Si elle est allumée en continu, le système d'assistance 7 est engagé et opérationnel. Le clignotement de la lampe signal un défaut ou une limite d'utilisation de l'assistance (température élevée, vitesse trop élevée,...).

Si la lampe est éteinte, le système d'assistance 7 est désengagé et inactif.

Le boitier de commande 13 permet d'engager manuellement le système d'assistance 7 pour permettre une marche avant ou arrière du pulvérisateur traîné 1.

## Revendications

1. Pulvérisateur traîné (1) destiné à être tracté par un tracteur (2) comprenant au moins deux roues (6), **caractérisé en ce qu'**il comprend un système d'assistance (7) comportant :
- un moteur hydraulique (8) couplé à chaque roue (6) du pulvérisateur traîné (1), le moteur hydraulique (8) étant alimenté en fluide sous pression par des moyens d'alimentation hydraulique (4) pour entrainer les roues (6),
- des moyens de couplage (9) pour coupler et découpler les moteur hydrauliques (8) avec les roues (6), et
- un dispositif de contrôle (12) contrôlant les moyens d'alimentation hydraulique (4) alimentant les moteurs hydrauliques (8) et les moyens de couplage (9),
- un système de compensation permettant de répartir la pression hydraulique entre chaque moteur hydraulique (8),
- un inclinomètre gauche/droite (15) relié au dispositif de contrôle (12),
le dispositif de contrôle (12) contrôlant le système de compensation (7) en fonction de l'inclinaison gauche/droite détectée par l'inclinomètre gauche/droite pour pousser davantage la roue la plus basse ou la roue qui est à l'extérieur du virage.

2. Pulvérisateur traîné (1) selon la revendication 1, **caractérisé en ce que**, chaque roue (6) étant montée sur un moyeu (10), chaque moteur hydraulique (8) est fixé sur l'un des moyeux (10).

3. Pulvérisateur traîné (1) selon l'une quelconque des revendications 1 à 2, **caractérisé en ce qu'**il comprend au moins un capteur de vitesse relié au dispositif de contrôle (12).

4. Pulvérisateur traîné (1) selon l'une quelconque des revendications 1 à 3, **caractérisé en ce qu'**il comprend un inclinomètre avant/arrière (14) relié au dispositif de contrôle (12).

5. Pulvérisateur traîné (1) selon l'une quelconque des revendications 1 à 4, **caractérisé en ce qu'**il comprend un capteur de pression de frein de service permettant de diminuer la poussée générée par le système d'assistance (7) en cas de freinage du tracteur (2), le capteur de pression de frein de service étant relié au dispositif de contrôle (12).

6. Pulvérisateur traîné (1) selon l'une quelconque des revendications 1 à 5, **caractérisé en ce qu'**il comprend un capteur d'angle mesurant l'angle entre le pulvérisateur traîné (1) et le tracteur (2).

7. Pulvérisateur traîné (1) selon les revendications 1 à 6, **caractérisé en ce que** le dispositif de contrôle (12) comprend un moyen de calcul permettant de calculer la pression hydraulique à transmettre par la pompe hydraulique (4) aux deux moteurs hydrauliques (8) d'après les informations données par l'inclinomètre avant/arrière (14), le capteur d'angle et le capteur de pression de frein de service afin de permettre un démarrage du pulvérisateur traîné (1) en côte.

8. Pulvérisateur traîné (1) selon l'une quelconque les revendications 1 à 7, **caractérisé en ce que** la vitesse maximale du pulvérisateur traîné (1) est supérieure à 5 km/h, de préférence comprise entre 10 km/h et 20 km/h et avantageusement comprise entre 13 km/h et 16 km/h.

## Patentansprüche

1. Gezogenes Sprühgerät (1), das dazu bestimmt ist, von einem Traktor (2) gezogen zu werden, der mindestens zwei Räder (6) aufweist, **dadurch gekennzeichnet, dass** es ein Assistenzsystem (7) aufweist, aufweisend:
- einen Hydraulikmotor (8), der mit jedem Rad (6) des gezogenen Sprühgerätes (1) gekoppelt ist, wobei der Hydraulikmotor (8) mit Fluid unter Druck von Hydraulikversorgungseinrichtungen (4) versorgt wird, um die Räder (6) anzutreiben,
- Kopplungseinrichtungen (9), um die Hydraulikmotoren (8) mit den Rädern (6) zu koppeln und zu entkoppeln, und
- eine Steuervorrichtung (12), die die Hydraulikversorgungseinrichtungen (4) steuert, die die Hydraulikmotoren (8) versorgen und die Kopplungseinrichtungen (9),
- ein Kompensationssystem, das es erlaubt, den hydraulischen Druck zwischen jedem Hydraulikmotor (8) zu verteilen,
- einen Links-/Rechts-Neigungsmesser (15), der mit der Steuervorrichtung (12) verbunden ist,
wobei die Steuervorrichtung (12) das Kompensationssystem (7) in Abhängigkeit von der vom Links-/Rechts-Neigungsmesser ermittelten Links-/Rechts-Neigung steuert, um das niedrigste Rad oder das Rad, das außerhalb der Kurve ist, mehr zu schieben.

2. Gezogenes Sprühgerät (1) nach Anspruch1, **dadurch gekennzeichnet, dass** jedes Rad (6) an einer Nabe (10) angebracht ist, und jeder Hydraulikmotor (8) an einer der Naben (10) befestigt ist.

3. Gezogenes Sprühgerät (1) nach einem der Ansprüche 1 bis 2, **dadurch gekennzeichnet, dass** es mindestens einen Geschwindigkeitssensor aufweist, der mit der Steuervorrichtung (12) verbunden ist.

4. Gezogenes Sprühgerät (1) nach einem der Ansprüche 1 bis 3, **dadurch gekennzeichnet, dass** es einen Vorne-/Hinten-Neigungsmesser (14) aufweist, der mit der Steuervorrichtung (12) verbunden ist.

5. Gezogenes Sprühgerät (1) nach einem der Ansprüche 1 bis 4, **dadurch gekennzeichnet, dass** es einen Betriebsbremsen-Drucksensor aufweist, der ermöglicht, den durch das Assistenzsystem (7) erzeugten Schub im Fall eines Bremsens des Traktors (2) zu verringern, wobei der Betriebsbremsen-Drucksensor mit der Steuervorrichtung (12) verbunden ist.

6. Gezogenes Sprühgerät (1) nach einem der Ansprüche 1 bis 5, **dadurch gekennzeichnet, dass** es einen Winkelsensor aufweist, der den Winkel zwischen dem gezogenen Sprühgerät (1) und dem Traktor (2) misst.

7. Gezogenes Sprühgerät (1) nach den Ansprüchen 1 bis 6, **dadurch gekennzeichnet, dass** die Steuervorrichtung (12) eine Berechnungseinrichtung aufweist, die ermöglicht, den Hydraulikdruck zu berechnen, der von der Hydraulikpumpe (4) zu den beiden Hydromotoren (8) gemäß den Informationen, die von dem Vorne-/Hinten-Neigungsmesser (14), dem Winkelsensor und dem Betriebsbremsen-Drucksensor bereitgestellt werden, zu übertragen ist, um ein Anfahren des gezogenen Sprühgerätes (1) am Hang zu ermöglichen.

8. Gezogenes Sprühgerät (1) nach einem der Ansprüche 1 bis 7, **dadurch gekennzeichnet, dass** die Maximalgeschwindigkeit des gezogenen Sprühgeräts (1) höher als 5 km/h ist und vorzugsweise zwischen 10 km/h und 20 km/h und vorteilhafterweise zwischen 13 km/h und 16 km/h liegt.

## Claims

1. Trailed sprayer (1) for being towed by a tractor (2) comprising at least two wheels (6), **characterised in that** it comprises an assistance system (7) including:
- a hydraulic motor (8) coupled to each wheel (6) of the trailed sprayer (1), the hydraulic motor (8) being supplied with pressurised fluid by hydraulic supply means (4) to drive the wheels (6),
- coupling means (9) for coupling and uncoupling the hydraulic motors (8) with and from the wheels (6), and a control device (12) controlling the hydraulic supply means (4) supplying the hydraulic motors (8) and coupling means (9),
- a compensation system for distributing hydraulic pressure between each hydraulic motor (8),
- a left/right inclinometer (15) connected to the control device (12),
the control device (12) controlling the compensation system (7) as a function of the left/right inclination detected by the left/right inclinometer to further thrust the lowest wheel or the wheel which is outside of the bend.

2. Trailed sprayer (1) according to claim 1, **characterised in that**, each wheel (6) being mounted to a hub (10), each hydraulic motor (8) is fastened to one of the hubs (10).

3. Trailed sprayer (1) according to any of claims 1 to 2, **characterised in that** it comprises at least one speed sensor connected to the control device (12).

4. Trailed sprayer (1) according to any of claims 1 to 3, **characterised in that** it comprises a front/rear inclinometer (14) connected to the control device (12).

5. Trailed sprayer (1) according to any of claims 1 to 4, **characterised in that** it comprises a service brake pressure sensor for decreasing thrust generated by the assistance system (7) in case of the tractor (2) braking, the service brake pressure sensor being connected to the control device (12).

6. Trailed sprayer (1) according to any of claims 1 to 5, **characterised in that** it comprises an angle sensor measuring the angle between the trailed sprayer (1) and the tractor (2).

7. Trailed sprayer (1) according to claims 1 to 6, **characterised in that** the control device (12) comprises a calculation means for calculating hydraulic pressure to be transmitted by the hydraulic pump (4) to both hydraulic motors (8) based on information given by the front/rear inclinometer (14), the angle sensor and the service brake pressure sensor in order to enable the trailed sprayer (1) to be hill started.

8. Trailed sprayer (1) according to any of claims 1 to 7, **characterised in that** the maximum speed of the trailed sprayer (1) is greater than 5km/h, preferably between 10km/h and 20km/h and advantageously between 13km/h and 16km/h.
